(19) **Europäisches Patentamt**

**European Patent Office**

**Office européen des brevets**

(11) **EP 1 113 458 B1**

(12) **EUROPEAN PATENT SPECIFICATION**

(45) Date of publication and mention
of the grant of the patent:
**02.02.2005 Bulletin 2005/05**

(51) Int Cl.7: **G21K 4/00**, C09K 11/85

(21) Application number: **00204217.4**

(22) Date of filing: **28.11.2000**

(54) **A binderless storage phosphor screen with needle shaped crystals and methods for producing the same**

Binderfreier Speicherleuchtschirm mit nadelförmigen Kristallen und Verfahren zu dessen Erzeugung

Ecran d'enregistrement luminescent avec des cristaux sans liant en forme d'aiguilles et procédés de production

(84) Designated Contracting States:
**DE FR GB**

(30) Priority: **24.05.2000 EP 00201857**
        **27.12.1999 DE 19963182**

(43) Date of publication of application:
**04.07.2001 Bulletin 2001/27**

(73) Proprietor: **AGFA-GEVAERT**
**2640 Mortsel (BE)**

(72) Inventors:
 • **Hell, Erich**
  **01054 Erlangen (DE)**
 • **Fuchs, Manfred**
  **90459 Nürnberg (DE)**
 • **Mattern, Detlef**
  **91056 Erlangen (DE)**
 • **Schmitt, Berhard**
  **91052 Erlangen (DE)**
 • **Leblans, Paul, c/o Agfa-Gevaert N.V.**
  **2640 Mortsel (BE)**

(56) References cited:
  **EP-A- 0 352 152**          **FR-A- 2 530 368**

**Description**

FIELD OF THE INVENTION

The present invention relates to a binderless storage phosphor screen with needle shaped phosphors.

BACKGROUND OF THE INVENTION

A well known use of storage phosphors is in the production of X-ray images. **In US-A 3 859 527** a method for producing X-ray images with a photostimulable phosphor, which are incorporated in a panel is disclosed. The panel is exposed to incident pattern-wise modulated X-ray beam and as a result thereof the phosphor temporarily stores energy contained in the X-ray radiation pattern. At some interval after the exposure, a beam of visible or infra-red light scans the panel to stimulate the release of stored energy as light that is detected and converted to sequential electrical signals which (are) be processed to produce a visible image. For this purpose, the phosphor should store as much as possible of the incident X-ray energy and emit as little as possible of the stored energy until stimulated by the scanning beam. This is called "digital radiography" or "computed radiography".
The image quality that is produced by any radiographic system using a phosphor screen thus also by a digital radiographic system, depends largely on the construction of the phosphor screen. Generally, the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when phosphor crystals with high crystal symmetry and simple chemical composition are used.
The use of alkali metal halide phosphors in storage screens or panels is well known in the art of storage phosphor radiology and the high crystal symmetry of these phosphors makes it possible to provide structured screens and binderless screens.
It has been disclosed that when binderless screens with an alkali halide phosphors are produced it is beneficial to have the phosphor crystal deposited as some kind of piles, needles, tiles, etc. In, e.g., **US-A-4 769 549** it is disclosed that the image quality of a storage phosphor screen can be improved when the alkali halide stimulable phosphor layer has a block structure shaped in fine pillars. In e.g. US-A-5 055 681 a storage phosphor screen comprising an alkali halide binderless phosphor in a pile-like structure is disclosed. The image quality of such screens needs still to be increased and in **JP-A-06/230 198** it is disclosed that the surface of the screen with pillar like phosphors is rough and that a levelling of that surface can increase the sharpness. In **US-A 5 874 744** the attention is drawn to the index of refractivity of the phosphor used to produce the storage phosphor screen with needle-like or pillar-like phosphor.
Although all alkali halide storage phosphor screens disclosed in this prior art can yield X-ray images with good quality, the need for a better compromise between speed of the recording system (i.e. as low as possible patient dose) with an image with high sharpness and low noise is still there.

**OBJECTS AND SUMMARY OF THE INVENTION**

It is an object of the invention to provide a binderless storage phosphor screen comprising an alkali metal storage phosphor in X-ray recording system with a very good compromise between speed of the recording system (i. e. as low as possible patient dose) with an image with high sharpness and low noise.
It is another object of the present invention to provide a method for producing such a binderless storage phosphor screen, starting from an alkali metal storage phosphor.
Still another object of the present invention is to provide a method for producing such a binderless storage phosphor screen, starting from phosphor precursors for an alkali metal storage phosphor.
The above mentioned objects are realised by providing a binderless storage phosphor screen having the specific features defined in claim 1 and the methods for producing such a binderless storage phosphors screen having the specific features defined in independent claims 5 and 6. Specific features for preferred embodiments of the invention are disclosed in the dependent claims 2-4 and 7-9.
Further advantages and embodiments of the present invention will become apparent from the following description and drawings.

BRIEF DESCRIPTION OF THE DRAWINGS

Figure 1 shows a SEM photograph of a phosphor screen with needle-shaped phosphor.

Figure 2 shows an XRD-spectrum of a screen with a comparative needle-shaped phosphor.

Figures 3 - 6 show XRD spectra of screens with invention needle-shaped phosphors.

Figure 7 shows a schematic view of a vapour deposition apparatus useful for producing a binderless storage phosphor screen.

DETAILED DESCRIPTION OF THE INVENTION

It has now been found that it is possible to improve a binderless phosphor screen comprising an alkali halide phosphor by producing it in such a manner that the phosphor is present on the support as needle-like crystals having a specific crystal orientation. It has been found that, when a phosphor screen showing high [100] unit cell orientation in the plane of the screen was produced, that such a screen shows a better compromise between speed and sharpness. The phosphor screens showing high (100) unit orientation in the plane of said screen are characterised by an X-Ray Diffraction spectrum wherein the intensity of the (100) diffraction line is at least equal to the intensity of the (110) diffraction line, when said XRD-spectrum is measured by positioning an X-ray source and an X-ray diffraction intensity detector at equal but varying angles with respect to the normal to said screen. Preferably the intensity of the (100) diffraction line is at least 5 times higher than the intensity of the (110) diffraction line and most preferably the intensity of the (100) diffraction line is at least 10 times higher than the intensity of the (110) diffraction line.

To realise such a crystal orientation on the screen the binderless phosphor layer is applied to the support a by method selected from the group consisting of physical vapour deposition, thermal vapour deposition, chemical vapour deposition, electron beam deposition, radio frequency deposition and pulsed laser deposition. In fact any of the methods above for preparing the binderless phosphor screen is suitable as long as the parameters of the method can be adjusted so that the requirements of the crystallinity of the phosphor needles as described herein above are met. Preferably the binderless phosphor screen is prepared by vacuum deposition under an inert gas atmosphere. It was found that by adjusting the temperature of the substrate and the pressure of the inert gas during vacuum deposition, the crystal orientation of the needles could be adjusted to the desired level.

The inert gas that is used during vapour deposition is preferably Ar. The temperature of the gas stream that enters the vacuum deposition apparatus is kept between 0 °C and 100 °C. Preferably the gas stream is kept at room temperature, i.e., between about 20 °C and about 30 °C. The cool gas stream entering the vacuum deposition apparatus can cool both the vapour before it is deposited as well as the substrate. It is preferred to keep said substrate at a temperature, T, so that $50\ ^\circ C \leq T \leq 300\ ^\circ C$, preferably $90\ ^\circ C \leq T \leq 200\ ^\circ C$. The Ar-pressure is at most 10 Pa, preferably kept between 1 Pa and 3 Pa, both limits included. In a more preferred embodiment the Ar-pressure is kept between 0.20 and 2.00 Pa and the temperature is adjusted so that the product of temperature in degrees Celsius and Ar-pressure in Pa is between 20 and 350.

It was found that when a phosphor screen was prepared under the circumstances set out above not only the crystal orientation of the needles could be adjusted to the desired level, but also the macroscopic dimensions of the needles could be influenced : when a method described above was used, very thin needles were obtained. This was especially so when the rate of vapour deposition of the phosphor or phosphor precursors was above 1 mg/cm$^2$min.

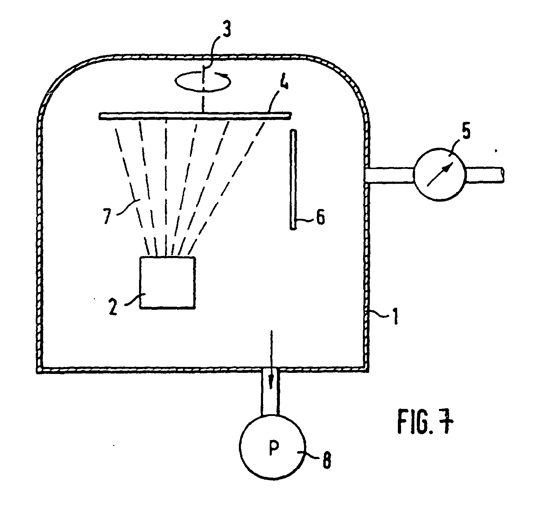

Figure 7 shows a schematic view of a vapour deposition apparatus useful for producing a binderless storage phosphor screen comprising an alkali metal storage phosphor said screen showing an XRD-spectrum with a (100) diffraction line having an intensity $I_{100}$ and a (110) diffraction line having an intensity $I_{110}$, so that $I_{100}/I_{110} \geq 1$, when said XRD-spectrum is measured according to TEST A. Such apparatus comprises a vacuum vessel (1) in which a vapour deposition source (2) is arranged opposite the substrate (4), which preferably rotates about an axis (3). An inert gas, such as argon, which is very much cooler than the vapour temperature of, typically, 650 to 700°C, for example being at room temperature, can be introduced into the vacuum vessel (1) via a regulating valve (5); the inert gas preferably firstly impinges on a baffle plate (6) and is not introduced directly into the vapour jet (7). The inert gas is evacuated up again via a vacuum pump (8), the vacuum pump is set such that a pressure of less than 10 Pa, preferably between 1 Pa and 3 Pa, is produced within the vacuum vessel (1). If so desired, when the cool gas stream is not sufficient for cooling of the substrate, it is possible to couple the substrate (4) to an external cooling device (not shown).

A binderless phosphor screen according to this invention can be prepared by vacuum deposition of the phosphor crystals on the substrate as well as by combining (mixing) the ingredients for the phosphor (phosphor precursors) and then evaporating this mixture so as to have the phosphor formed in situ during evaporation.

The phosphor in a binderless phosphor screen according to this invention can be any alkali metal phosphor known in the art. Suitable phosphors are, e.g., phosphors according to formula I :

$$M^{1+}X.aM^{2+}X'_2BM^{3+}X''_3{:}cZ$$

wherein: $M^{1+}$ is at least one member selected from the group consisting of Li, Na, K, Cs and Rb,
$M^{2+}$ is at least one member selected from the group consisting of Be, Mg, Ca, Sr, Ba, Zn, Cd, Cu, Pb and Ni,
$M^{3+}$ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga,
Z is at least one member selected from the group $Ga^{1+}$, $Ge^{2+}$, $Sn^{2+}$, $Sb^{3+}$ and $As^{3+}$, X, X' and X'' can be the same or different and each represents a halogen atom selected from the group consisting of F, Br, Cl, I and $0 \leq a \leq 1$, $0 \leq b \leq 1$ and $0 < c \leq 0.2$. Such phosphors have been disclosed in, e.g., US-A-5 736 069.

Highly preferred phosphors for use in a binderless phosphor screen of this invention are CsX:Eu stimulable phosphors, wherein X represents a halide selected from the group consisting of Br and Cl prepared by a method comprising the steps of :

- mixing said CsX with between $10^{-3}$ and 5 mol % of an Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

Most preferably for use in a binderless phosphor screen of this invention is a CsBr:Eu stimulable phosphor, prepared by a method comprising the steps of :

- mixing said CsX with between $10^{-3}$ and 5 mol % of an Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

The binderless screen can be prepared by bringing the finished phosphor on the support by any method selected from the group consisting of thermal vapour deposition, chemical vapour deposition, electron beam deposition, radio frequency deposition and pulsed lacer deposition. It is also possible to bring the alkali metal halide and the dopant together and depositing them both on the support in such a way that the alkali metal phosphor is doped during the manufacture of the screen. Thus the invention encompasses a method for manufacturing a phosphor screen containing a CsX:Eu stimulable phosphor, wherein X represents a halide selected from the group consisting of Br and Cl comprising the steps of :

- bringing multiple containers of said CsX and an Europium compound selected from the group consisting of $EuX'_2$, $EuX'_3$ and EuOX', X' being a halide selected from the group consisting of F, Cl, Br and I in condition for vapour deposition and
- depositing, by a method selected from the group consisting of, thermal vapour deposition, chemical vapour deposition, electron beam deposition, radio frequency deposition and pulsed laser deposition, both said CsX and said Europium compound on a substrate in such a ratio that on said substrate a CsX phosphor, doped with between $10^{-3}$ and 5 mol % of Europium, is formed.

The deposition can proceed from a single container containing a mixture of the starting compounds in the desired proportions. Thus the method encompasses further a method for manufacturing a phosphor screen containing a CsX:Eu stimulable phosphor, wherein X represents a halide selected from the group consisting of Br and Cl comprising the steps of :

- mixing said CsX with between $10^{-3}$ and 5 mol % of an Europium compound selected from the group consisting of $EuX'_2$, $EuX'_3$ and EuOX', X' being a halide selected from the group consisting of F, Cl, Br and I
- bringing said mixture in condition for vapour deposition and
- depositing said mixture on a substrate by a method selected from the group consisting of physical vapour deposition, thermal vapour deposition, chemical vapour deposition, electron beam deposition, radio frequency deposition and pulsed laser deposition.

Support materials useful for binderless storage screens having a phosphor layer with a crystal orientation as per this invention include cardboard, glass, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminium foil and aluminium alloy foil; ordinary papers; baryta paper; resin-coated papers; pigment papers containing titanium dioxide or the like; and papers sized with polyvinyl alcohol or the like. A glass or Al-sheet or a thermostable plastic film is preferably employed as the support material.

When a glass support is used the support may comprise a coated layer with a light absorbing compound. This layer can be present on the back side (side where no phosphor is present) or may be present underneath the phosphor. The supports can also comprise layers for having a better adhesion between the phosphor and the support.

The support, when it is a thermostable plastic film may contain a light-absorbing material such as carbon black, or may contain a light-reflecting material such as titanium dioxide or barium sulphate. The former is appropriate for preparing a high-resolution type storage screen, while the latter is appropriate for preparing a high-sensitivity type storage screen.

These supports may have a thickness which may differ depending on the material of the support, and may generally be between 60 μm and 10,000 μm, more preferably between 80 μm and 5,000 μm from the standpoint of handling.

EXAMPLES

Preparation of the phosphor

CsBr:Eu screens were made via thermal vapour deposition of CsBr and EuOBr. To this aim, CsBr was mixed with EuOBr and placed in a container in a vacuum deposition chamber. The phosphor was deposited on a glass disk with a thickness of 1.5 mm and a diameter of 40 mm. The distance between the container and the substrate was 10 cm. During evaporation, the substrate was rotated at 12 rpm. The container with starting materials was heated to a temperature of 750°C.

Before the start of the evaporation, the chamber was evacuated to a pressure of $4.10^{-5}$ mbar. During the evaporation process, Ar was introduced in the chamber. Variables in the deposition process were the substrate temperature and the Ar gas pressure. The different screens were produced under the conditions listed in Table 1. The Eu-concentration in the evaporated screens was measured with X-ray fluorescence and was of the order of 800 ppm.

Via Scanning Electron Microscopy (SEM), the morphology of the deposited phosphor layer was determined. All phosphor layers were made up of needle shaped crystals.

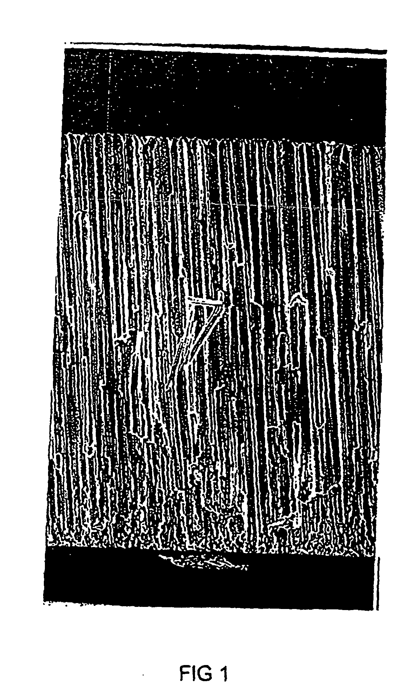

Figure 1 shows a SEM view of an example phosphor layer taken perpendicular on an edge of the phosphor layer. It is clear that a needle like structure is present.

Table 1:

| Substrate temperature and Ar gas pressure at the different screen depositions | | |
|---|---|---|
| **Screen** | **Substrate temperature (°C)** | **Ar pressure (Pa)** |
| Comparative example 1 | 130 | 3.2 |
| Invention Example 1 | 150 | 2.2 |
| Invention Example 2 | 150 | 1.1 |
| Invention Example 3 | 300 | 0 |
| Invention Example 4 | 92 | 2.4 |

**Measurement of crystal orientation : TEST A**

The orientation of the crystal unit cell in the deposited needle shaped crystal has been determined through measurement of the XRD spectrum. XRD spectra have been measured with the commercially available diffractometer. The diffractometer was a Philips X'pert with a MPSS (Multiple Purpose Sampling Stage) and a Cu tube emitting a Kα-line of 0.154056 nm. The spectra were taken and analysed with the commercial software coming with the diffractometer. The settings and measurement parameters of the measurement were as follows (TEST A):

<u>Settings</u> 40 kV and 50 mA
       Incident beam : Divergence slit : fixed 1/8°
       Incident beam : Anti scatter slit : fixed 1/4°

Incident beam : Fixed beam mask : 10mm
Measurement Start 2θ : 2.00°
parameters End 2θ: 80.00°
Step size : 0.05°
Time per step : 0.60s
Secondary beam path : lower
Scan axis : 2θ
Scan mode : continuous
Total time : 15min36s
Gonio angle : 2.0°
Spinning : no

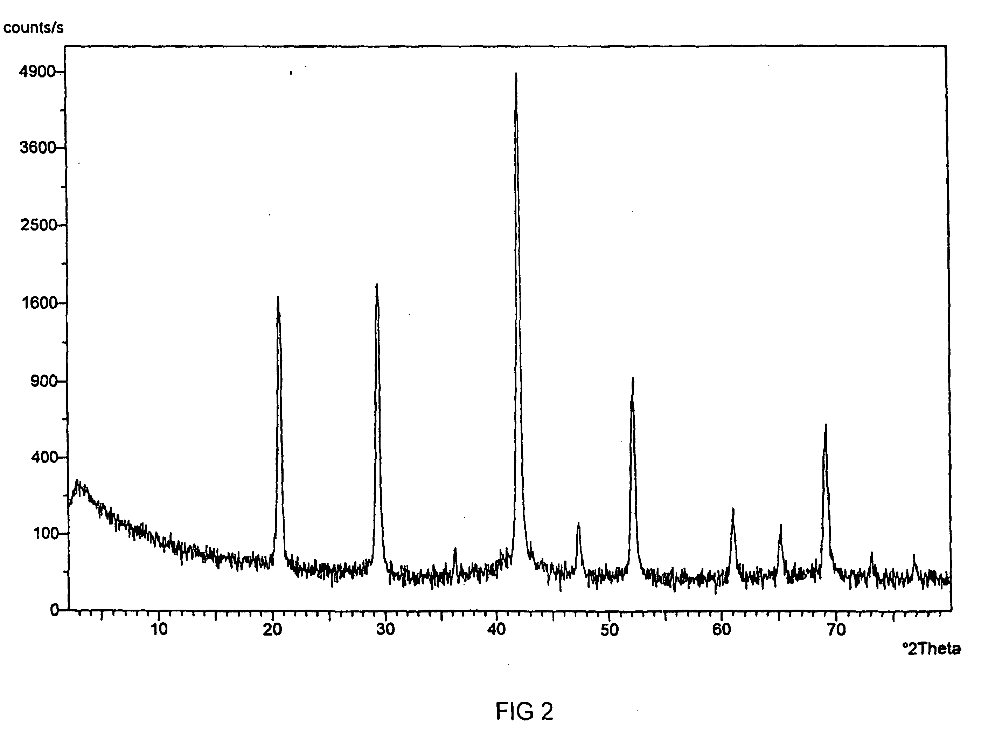

Figure 2 shows the XRD spectrum comparative example 1. A fairly strong [100] diffraction line is shown at 2θ of about 21° and an evenly strong [110] diffraction line is shown at 2θ of about 29°, also a strong [200] diffraction line is shown at 2θ of about 42°.

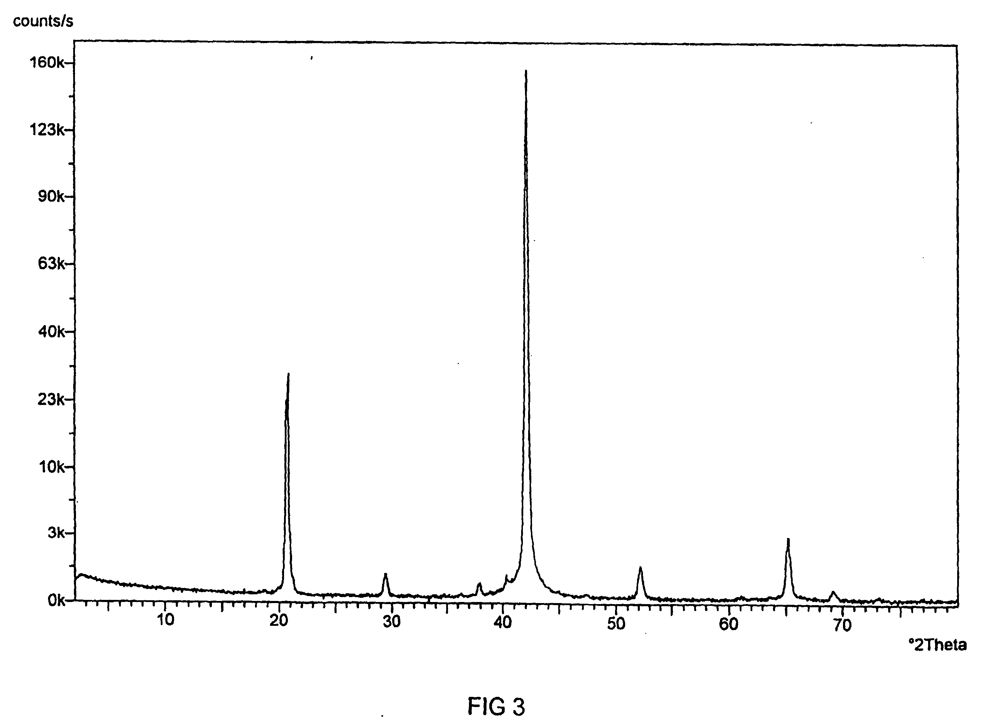

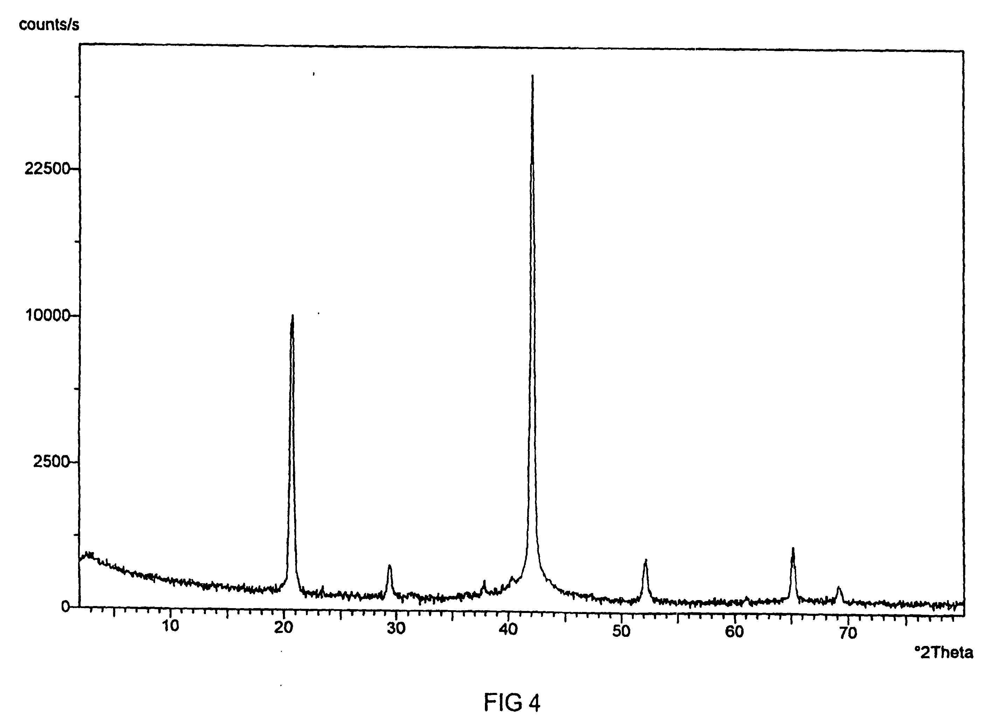

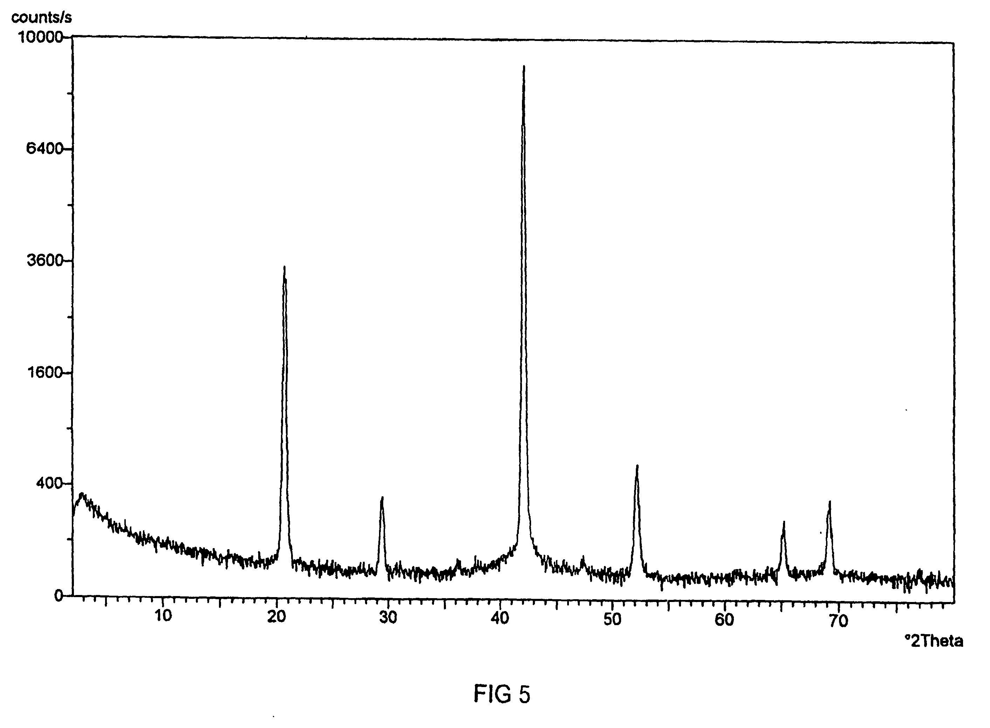

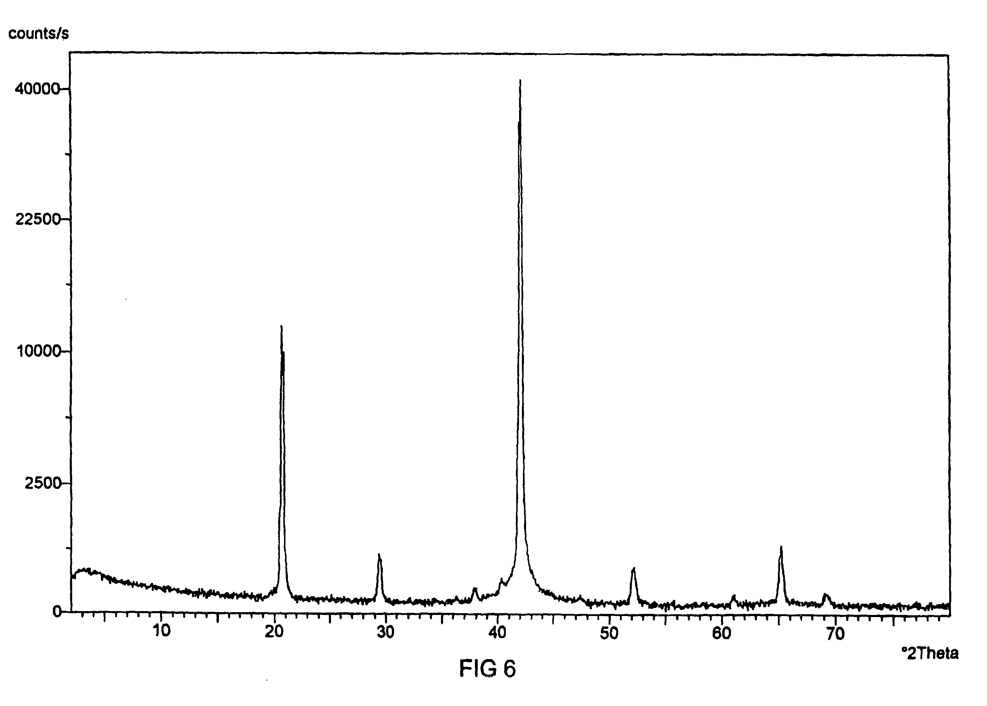

Figures 3 to 6 show the XRD-spectra of respectively invention example 1, 2, 3 and 4. In these spectra the [110] diffraction line at 2θ of about 29° is barely visible, while the [100] diffraction line at 2θ of about 21° and the [200] diffraction line at 2θ of about 42° remain very strong.

For each of the screens, the ratio between the intensity of the [100] peak in the XRD-spectrum and the [110] peak was calculated. The results are given in table 2

Table 2

| Screen | Ratio [100]/[110] |
|---|---|
| Comparative example 1 | 0.79 |
| Invention Example 1 | 54.71 |
| Invention Example 2 | 52.65 |
| Invention Example 3 | 12.16 |
| Invention Example 4 | 14.05 |

Sensitivity and sharpness measurements

In a first measurement the sensitivity (speed) of the phosphor screens, prepared under the conditions given in Table 1 was measured.

The screens were homogeneously irradiated with a dose of ca. 50 mR at 80 kVp. Read out was done in a flying spot scanner. In the scanner, the scanning light source was a 30 mW diode laser emitting at 690 nm. A 4-mm BG-39 (trade name of Hoya) filter was used to separate the stimulation light from the screen emission light. The scan-average levels (SAL's) were determined as the average signal produced by the screens in the photomultiplier tube.

In a second measurement, the sharpness of the images, produced by the screens was measured. As a measure for the sharpness, the square wave response at 2 line pairs (lp) mm was determined The optical spatial resolution is expressed in line-pairs per millimeter lp/mm.

A grid with line pairs at spatial frequencies of 0.025 to 3 lp/mm was placed on top of the cassette, containing the screens. The grid was imaged at 80 kVp and 5 mA during 30". The screens were scanned with the flying spot scanner described above. The signal modulation was determined at 0.025 lp/mm and at 2 lp/mm. The SWR at 2 lp/mm was calculated as the ratio of the signal modulation at 2 lp/mm to the signal modulation at 0.025 lp/mm. The results of the measurements are listed in Table 3. Wherein the speed of the comparative example screen is arbitrary set to 100.

Table 3

| Screen | Speed (arbitrary units | SWR at 2 lp/mm |
|---|---|---|
| Comparative example 1 | 100 | 0.50 |
| Invention Example 1 | 186 | 0.56 |
| Invention Example 2 | 214 | 0.59 |
| Invention Example 3 | 102 | 0.66 |

Table 3   (continued)

| Screen | Speed (arbitrary units | SWR at 2 lp/mm |
|---|---|---|
| Invention Example 4 | 156 | 0.53 |

It can be concluded that the comparative example 1 screen with less developed (100) unit cell orientation, has inferior quality with respect to the invention examples 1 - 4 with almost perfect (100) unit cell orientation. It is possible to adjust the orientation of the crystal to choose a desired speed/sharpness compromise by using the temperature of the substrate during the vacuum deposition and the pressure of the inert gas as parameters.

## Claims

1.   A binderless storage phosphor screen comprising an alkali metal storage phosphor **characterised in that** said screen shows an X-Ray Diffraction / XRD-spectrum with a (100) diffraction line having an intensity $I_{100}$ and a (110) diffraction line having an intensity $I_{110}$, so that $I_{100}/I_{110} \geq 1$, when said XRD-spectrum is measured according to a TEST A.

2.   A binderless storage phosphor screen according to claim 1, wherein $I_{100}/I_{110} \geq 5$.

3.   A binderless storage phosphor screen according to claim 1 or 2, wherein said phosphor is a CsX:Eu stimulable phosphor, wherein X represents a halide selected from the group consisting of Br and Cl.

4.   A binderless storage phosphor screen according to any of claims 1 or 2, containing a CsBr:Eu stimulable phosphor.

5.   Method for producing a binderless storage phosphor screen comprising the steps of :

   -   providing an alkali metal storage phosphor
   -   vacuum depositing said phosphor on a substrate **characterised in that** during said step of vacuum depositing said substrate is kept at a temperature T, such that $50\ °C \leq T \leq 300\ °C$ and said vacuum deposition proceeds in an Ar-atmosphere with an Ar-pressure of at most 3 Pa.

6.   Method for producing a binderless storage phosphor screen comprising the steps of :

   -   combining phosphor precursors for an alkali metal storage phosphor
   -   vacuum depositing said combination of phosphor precursors on a substrate **characterised in that** during said step of vacuum depositing said substrate is kept at a temperature T, such that $50\ °C \leq T \leq 300\ °C$ and said vacuum deposition proceeds in an Ar-atmosphere with an Ar-pressure of at most 3 Pa.

7.   A method according to claim 5 or 6, wherein said temperature of said substrate T, is such that $90\ °C \leq T \leq 200\ °C$

8.   A method according to any of claims 5 to 7, wherein said Ar-pressure is kept between 0.20 and 2.00 Pa, both limits included and said temperature of said substrate is adjusted so as to have a product between temperature, in degree Celsius, and Ar-pressure, in Pa, between 20 and 350, both limits included.

9.   A method according to any of claims 5 to 8, wherein during said step of vacuum deposition a deposition rate of at least 1 $mg/cm^2min$ is used.

## Patentansprüche

1.   Eine bindemittelfreie Speicherleuchtstofffolie, die einen Alkalimetall-Speicherleuchtstoff enthält, **dadurch gekennzeichnet, dass** die Folie ein nach einem TEST A-Verfahren gemessenes. Röntgenbeugungsspektrum (XRD-Spektrum) mit einer (100)-Beugungslinie mit einer solchen Intensität $I_{100}$ und einer (110)-Beugungslinie mit einer solchen Intensität $I_{110}$ aufweist, dass $I_{100}/I_{110} \geq 1$.

2.   Bindemittelfreie Speicherleuchtstofffolie nach Anspruch 1, **dadurch gekennzeichnet, dass** $I_{100}/I_{110} \geq 5$.

3. Bindemittelfreie Speicherleuchtstofffolie nach Anspruch 1 oder 2, **dadurch gekennzeichnet, dass** der Leuchtstoff ein ausleuchtbarer CsX:Eu-Leuchtstoff ist, wobei X ein Halogenid aus der Gruppe bestehend aus Br und C1 ist.

4. Bindemittelfreie Speicherleuchtstofffolie nach einem der Ansprüche 1 oder 2, die einen ausleuchtbaren CsBr:Eu-Leuchtstoff enthält.

5. Ein durch die nachstehenden Schritte gekennzeichnetes Verfahren zur Herstellung einer bindemittelfreien Speicherleuchtstofffolie :

   - Bereitstellen eines Alkalimetall-Speicherleuchtstoffes,
   - Vakuumaufdampfung des Leuchtstoffes auf ein Substrat, **dadurch gekennzeichnet, dass** das Substrat während der Vakuumaufdampfung auf einer Temperatur T gehalten wird, die so eingestellt wird, dass $50°C \leq T \leq 300°C$, und die Vakuumaufdampfung in einer Argon-Atmosphäre mit einem Argondruck von höchstens 3 Pa erfolgt.

6. Ein durch die nachstehenden Schritte gekennzeichnetes Verfahren zur Herstellung einer bindemittelfreien Speicherleuchtstofffolie :

   - Kombinieren der Leuchtstoffvorstufen eines Alkalimetall-Speicherleuchtstoffes,
   - Vakuumaufdampfung der Kombination der Leuchtstoffvorstufen auf ein Substrat, **dadurch gekennzeichnet, dass** das Substrat während der Vakuumaufdampfung auf einer Temperatur T gehalten wird, die so eingestellt wird, dass $50°C \leq T \leq 300°C$, und die Vakuumaufdampfung in einer Argon-Atmosphäre mit einem Argondruck von höchstens 3 Pa erfolgt.

7. Verfahren nach Anspruch 5 oder 6, **dadurch gekennzeichnet, dass** die Temperatur T des Substrats so eingestellt wird, dass $90°C \leq T \leq 200°C$.

8. Verfahren nach einem der Ansprüche 5 bis 7, **dadurch gekennzeichnet, dass** der Argondruck zwischen 0,20 und 2,00 Pa, einschließlich beider Grenzwerte, gehalten und die Temperatur des Substrats so eingestellt wird, dass das Produkt der Temperatur in °C und des Ar-Drucks in Pa zwischen 20 und 350, einschließlich beider Grenzwerte, liegt.

9. Verfahren nach einem der Ansprüche 5 bis 8, **dadurch gekennzeichnet, dass** die Aufdampfgeschwindigkeit während des Vakuumauf dampfungsschritts zumindest 1 mg/cm$^2$min beträgt.

**Revendications**

1. Écran à luminophore d'emmagasinage exempt de liant comprenant un luminophore d'emmagasinage à base d'un métal alcalin **caractérisé en ce que** ledit écran présente un spectre de diffraction des rayons X (spectre XRD) comprenant une ligne de diffraction (100) possédant une intensité $I_{100}$ et une ligne de diffraction (110) possédant une intensité $I_{110}$, de telle sorte que $I_{100}/I_{110} \geq 1$, lorsque ledit spectre XRD est mesuré conformément au TEST A.

2. Écran à luminophore d'emmagasinage exempt de liant selon la revendication 1, dans lequel $I_{100}/I_{110} \geq 5$.

3. Écran à luminophore d'emmagasinage exempt de liant selon la revendication 1 ou 2, dans lequel ledit luminophore est un luminophore stimulable à base de CsX:Eu, dans lequel X représente un halogénure choisi parmi le groupe constitué par le brome et le chlore.

4. Écran à luminophore d'emmagasinage exempt de liant selon l'une quelconque des revendications 1 ou 2, contenant un luminophore à base de CsBr:Eu.

5. Procédé pour préparer un écran à luminophore d'emmagasinage exempt de liant, comprenant les étapes consistant à :

   - procurer un luminophore d'emmagasinage à base d'un métal alcalin
   - déposer par métallisation sous vide ledit luminophore sur un substrat, **caractérisé en ce qu'**au cours de ladite étape de métallisation sous vide, ledit substrat est maintenu à une température T de telle sorte que 50 °C $\leq$

T ≤ 300 °C et ladite métallisation sous vide a lieu sous atmosphère d'argon avec une pression maximale d'argon de 3 Pa.

6. Procédé pour préparer un écran à luminophore d'emmagasinage exempt de liant, comprenant les étapes consistant à :

   - combiner des précurseurs de luminophores pour obtenir un luminophore d'emmagasinage à base d'un métal alcalin
   - déposer par métallisation sous vide ladite combinaison de précurseurs de luminophores sur un substrat, **caractérisé en ce qu'**au cours de ladite étape de métallisation sous vide, ledit substrat est maintenu à une température T de telle sorte que 50 °C ≤ T ≤ 300 °C et ladite métallisation sous vide a lieu sous atmosphère d'argon avec une pression maximale d'argon de 3 Pa.

7. Procédé selon la revendication 5 ou 6, dans lequel ladite température T dudit substrat est telle que 90 °C ≤ T ≤ 200 °C.

8. Procédé selon l'une quelconque des revendications 5 à 7, dans lequel ladite pression d'argon est maintenue entre 0,20 et 2,00 Pa, les deux limites étant incluses, et ladite température dudit substrat est réglée de façon à disposer d'un produit de la température, en degrés Celsius, et la pression d'argon, en Pa, entre 20 et 350, les deux limites étant incluses.

9. Procédé selon l'une quelconque des revendications 5 à 8, dans lequel, au cours de ladite étape de métallisation sous vide, on utilise un débit de déposition d'au moins 1 mg/cm$^2$ min.

FIG 1

FIG 2

EP 1 113 458 B1

FIG 3

FIG 4

FIG 5

EP 1 113 458 B1

FIG 6

FIG. 7